# NEW EUROPEAN PATENT SPECIFICATION

(11) **EP 0 365 738 B2**
(45) Date of publication and mention of the opposition decision: **17.09.1997**
(45) Mention of the grant of the patent: 28.07.1993
(21) Application number: 89105297.9
(22) Date of filing: 23.03.1989
(51) Int. Cl.: A23D 7/00, A23C 15/16

(54) **A low fat spread**
Fettarmer Brotaufstrich
Produit à tartiner à faible teneur en matières grasses

(30) Priority: 19.10.1988 IE 315488
(43) Date of publication of application: 02.05.1990
(73) Proprietor: WATERFORD CO-OPERATIVE DAIRY AND TRADING SOCIETY LIMITED, Country Waterford (IE)
(72) Inventor: Sweeney, Kevin 7 Priory Avenue Landsend, County Waterford (IE); Cass, Michael, County Waterford (IE)
(74) Representative: Schmidt-Evers, Jürgen, Dipl.-Ing.

(56) References cited:
- EP-A- 0 011 344
- EP-A- 0 089 174
- EP-A- 0 271 132
- EP-A- 0 293 980
- FR-A- 2 330 326
- GB-A- 1 564 800
- GB-A- 1 564 801
- GB-A- 2 084 171
- RESEARCH DISCLOSURE, no. 192, April 1980, page 140, abstract no. 19221, Havant, Hants; J. MADSEN: "Low calorie spread with protein"
- RESEARCH DISCLOSURE, January 1985, page 1, page 1, abstract no. 24901; J. MADSEN: "Mono-diglycerides based on partially hydrogenated fishoil for water-in-oil emulsions with high water content"
- Low calorie Spreads in Europe, paper presented at the Int. Conf. on Oils, Fats and Waxes. Auckland, New Zealand, 13-17 Feb. 1993

## Description

The invention relates to a low fat spread and to a process for preparing such a spread.

More particularly, the invention relates to a low fat spread of the type comprising a continuous fat phase and a dispersed proteinaceous aqueous phase gelled with the gelling agents known from "RESEARCH DISCLOSURE, no. 192, (1980), abst. no. 19221.

GB-A 2 084 171 discloses a process for producing a low fat spread. In the process described therein an initial emulsion oil-in-water is formed and must be further inverted to an emulsion of water-in-oil type during processing.

EP-A-0 271 132 discloses an edible dispersion which comprises an aqueous phase and a fat phase. The aqueous phase is a gel-forming composition comprising carrageenin and a cation A of a type and in a concentration effective to cause the gel-forming composition to have a transition mid-point temperature below 50°C. In the process described therein an oil-in-water emulsion is prepared from the fat phase and the aqueous phase composition. This emulsion is than inverted to a water-in-oil emulsion by subjecting it to working and cooling.

In "RESEARCH DISCLOSURE. No. 249. (1985. Abst. No. 24901)" a very high protein spread is described having a proteinaceous aqueous phase with 7% casein and 1% skimmed milk powder. The pH of the emulsion must be greater than 6.0.

EP-A-0 098 174 discloses a spread which uses particular types of fat, none of which are used in the present invention.

FR-A-2 330 326 discloses a spread which is entirely different from the spread of the present invention. For example, the level of protein is higher than the range specified in the present invention. A thickener rather than a gelling agent is used.

EP-A-0 293 980, which is to be considered as prior art according to article 54(3) EPC, discloses a process for the preparation of a low fat spread having a continuous fat phase and a dispersed proteinaceous aqueous phase. The process involves a phase invertion from an oil-in-water emulsion to a water-in-oil emulsion.

In the paper entitled "Low Calorie Spreads in Europe" presented at the international Conference on Oils, Fats and Waxes, Auckland, New Zealand 13-17 February, 1983, a low fat spread is described which has between 0.2% and 0.3% whey protein in the aqueous phase. The pH of the aqueous phase is stated to be between 4.7 and 6.3. As whey protein is stable at the pH described the protein will remain dissolved.

The present invention is as described in the claims.

We have found that a protein content of the aqueous phase in this range gives a low fat spread which has particularly good organoleptic properties.

In one embodiment of the invention the low fat spread is a lactic spread having a low pH preferably in the range 4.0 to 5.6, most preferably in the range of 4.7 to 4.9.

In one embodiment of the invention the gelling agent comprises gelatin, sodium alginate or any other suitable gelling agent.

In another embodiment of the invention the gelling agent is present in an amount of between 3.25% and 5%, most preferably approximately 3.33% by weight of the aqueous phase.

We have found that this proportion of gelatin in relation to the protein content gives favourable processing and organoleptic properties.

In one embodiment of the invention the spread includes an emulsifier such as a monoglyceride which is preferably present in an amount of from 0.1% to 1%, most preferably, approximately 0.5% by weight of the product.

In another aspect the invention provides a process for preparing a low fat spread according to the invention comprising the steps of preparing an aqueous phase comprising water, a gelling agent and salt, preparing a fat phase, and combining the aqueous and fat phases to form a water-in-oil emulsion.

In a preferred embodiment of this aspect of the invention the aqueous phase is prepared by preparing a first solution of water and gelling agent and a second solution of water and salt and subsequently combining and mixing the two solutions.

In one embodiment of the invention lactic acid and fermented reconstituted skim milk solids are added to the combined salt and gelling agent solutions to form the aqueous phase.

Preferably the water-in-oil emulsion formed is pumped using a positive displacement pump through a plate heat exchanger unit, preferably a scraped surface heat exchanger.

The invention will be more clearly understood from the following description thereof given by way of example only. Unless otherwise stated all percentages are by weight.

### Example 1

A low fat spread was prepared from the following ingredients.

| Aqueous phase (percentages are by weight of the total aqueous phase). | |
|---|---|
| Water (added as liquid) | 90.04% |
| Gelatin | 3.33% |
| Salt (NaCl) | 0.83% |
| Preservative (potassium sorbate) | 0.166% |
| Lactic acid | 0.79% |
| Fermented reconstituted skim milk | 4.85% |

| Fat Phase: (Percentages are by weight of the fat phase) | |
|---|---|
| Milk fat | 98.73% |
| Monoglyceride emulsifier | 1.25% |
| Colouring agents (vitamin A) | 0.02% |

### Aqueous Phase

To prepare the aqueous phase the gelatin was first dissolved in approximately 30% of the water which was added as liquid at a temperature of approximately 73°C. The salt and preservative were dissolved in sufficient water for dissolution at a temperature of approximately 73°C. The gelatin and salt solutions were combined and mixed, with water added as liquid, added as required and cooled to approximately 40°C.

22% reconstituted skim milk powder was inoculated with bacterial culture and subsequently incubated. The bacterial culture may be starter type Fr 19 and starter type 4/25, available from the Nederlands Institute Voor Zuivelonderzoek and are preferably grown separately. Starter type 4/25 contains Streptococcus diacetilactis as aroma bacterium. Starter type Fr 19 is a Leuconostoc-containing B-starter.

The reconstituted skim milk power and bacteria were incubated for approximately 24 hours until a pH range of 5.0 to 5.2 is reached. 4.85% concentration (based on the aqueous base) of this product which corresponds to approximately .35% protein of the aqueous phase together with the lactic acid were then added to the combined gelatin and salt solutions at a temperature of approximately 40°C.

After preparation, the pH of the aqueous phase is in the range of 4.3 to 5.2, preferably 4.6 to 4.9.

If desired to achieve flavour properties, further diacetyl may be added to the aqueous phase.

### Fat Phase

The milk fat of the fat phase is typically dehydrated milk fat. To prepare the fat phase the fat is melted at approximately 80°C and the emulsifier and colouring agent are added while mixing the fat.

### Preparation of emulsion

The aqueous phase and the fat phase are then combined by adding the aqueous phase to the fat phase slowly while agitating the mixture to achieve uniform mixing to form a water-in-oil type emulsion.

The emulsion is then pumped using a positive displacement pump through a plate heat exchanger such as a scraped surface heat exchanger such as that sold under the name Votator or Perfector to form a low fat spread.

The low fat spread prepared by the process has solid characteristics somewhat similar to that of butter. To make the spread more readily spreadable a vegetable oil may be added.

Trials have indicated that the low fat spread has very good organoleptic properties.

The final product of the process has the following constituents based on percent by weight of the final product.

| | |
|---|---|
| Water (added as liquid) | 54.00% |
| Gelatin | 2.00% |
| Salt (NaCl) | 0.5% |
| Preservative (potassium sorbate) | 0.10% |
| Lactic acid | 0.50% |
| Fermented reconstituted skim milk | 2.91% (of which protein constitutes 0.24%) |
| Milk fat | 39.50% |
| Monoglyceride emulsifier | 0.50% |
| Colouring agent (vitamin A) | 0.005% |

We have found that the amount of protein used is of particular importance when using skim milk solids. We have found that a small quantity of protein is essential for flavour release however, the amount of protein used is low, most preferably, below 0.5% to ensure that phase inversion does not occur prior to passing through the plate heat exchanger. This is particularly important in acidic conditions as we have found that in acidic conditions high levels of milk protein may cause phase inversion.

It will be appreciated that any suitable gelling agent may be used. For example, instead of gelatin, sodium alginate may be used as a gelling agent.

In this specification gelling agents are not regarded as being proteins. At the level of 0.1 to 0.4% by weight of the aqueous phase constituting protein the preferred gelling agent range is 3.25 to 5%, most preferably 3.33%, of the aqueous phase.

A size analyses of the undissolved protein particles in the aqueous phase indicated an average particle size in excess of 10 micrometers.

## Claims

1. A low fat spread, comprising
- a continuous fat phase, and
- a dispersed proteinaceous aqueous phase gelled with a gelling agent, **the protein of the aqueous phase being derived from fermented reconstituted skim milk** and
being present in an amount of from 0,2 % to 0,4 % by weight of the aqueous phase, wherein the fat phase and the aqueous phase are combined to form a water-in-oil-emulsion and wherein the aqueous phase contains an acid such that the pH of the aqueous phase is in the range of from 4.0 to 5.6 and wherein undissolved protein particles are present having an average particle diameter in excess of 10 µm.

2. A low fat spread as claimed in claim 1 characterised in that the protein content in the aqueous phase is approximately 0.38% by weight of the aqueous phase.

3. A low fat spread as claimed in claim 1 or 2 characterised in that the source of protein is fermented reconstituted skim milk solids.

4. A low fat spread as claimed in any of claims 1 to 3 characterised in that the pH of the aqueous phase is in the range of 4.7 to 4.9.

5. A low fat spread as claimed in any of claims 1 to 4 characterised in that the gelling agent is selected from gelatin and sodium alginate and is present in an amount of between 3.25% and 5% by weight of the aqueous phase.

6. A low fat spread as claimed in claim 5 wherein the gelling agent is present in an amount of approximately 3.33% by weight of the aqueous phase.

7. A low fat spread as claimed in any preceding claim wherein the spread includes an emulsifier such as monoglyceride which is present in an amount of from 0.1% to 1% by weight of the product.

8. A process for preparing a low fat spread as claimed in any preceding claim comprising the steps of preparing an aqueous phase comprising water, a gelling agent, an acid, and salt, preparing a fat phase and combining the aqueous and fat phases to form a water-in-oil emulsion.

9. A process as claimed in claim 8 characterised in that the aqueous phase is prepared by preparing a first solution of water and gelling agent and a second solution of water and salt and subsequently combining and mixing the two solutions.

10. A process as claimed in claim 8 or 9 characterised in that lactic acid and fermented reconstituted skim milk solids are added to the combined salt and gelling agent solutions to form the aqueous phase.

11. A process as claimed in any of claims 8 to 10 wherein the water-in-oil emulsion formed is pumped by a positive displacement pump through a plate heat exchanger unit.

## Patentansprüche

1. Fettarmer Brotaufstrich, mit
- einer beständigen fetten Phase, und
- einer dekonzentrierten proteinhaltigen, wässerigen Phase, erstarrt durch einen Gelierzusatz, wobei das Protein der wässerigen Phase von fermentierter, in Wasser gelöster Magermilch hergeleitet wird und in einer Größenordnung von 0,2 bis 0,4 Gewichtsprozent der wässerigen Phase liegt,
wobei die fette Phase und die wässerige Phase miteinander verbunden sind, um eine Wasser-Öl-Emulsion zu bilden, und wobei die wässerige Phase eine Säure enthält, so daß der pH-Wert der wässerigen Phase in einem Bereich von 4,0 bis 5,6 liegt und wobei ungelöste Proteinpartikel vorhanden sind, die einen Durchschnittspartikeldurchmesser über 10µm haben.

2. Fettarmer Brotaufstrich nach Anspruch 1, dadurch gekennzeichnet, daß der Proteingehalt der wässerigen Phase ungefähr 0,38 Gewichtsprozent der wässerigen Phase beträgt.

3. Fettarmer Brotaufstrich nach Anspruch 1 oder 2, dadurch gekennzeichnet, daß der Ursprung des Proteins fermentierte in Wasser gelöste Trockenmagermilch ist.

4. Fettarmer Brotaufstrich nach einem der Ansprüche 1 bis 3, dadurch gekennzeichnet, daß der pH-Wert der wässerigen Phase im Bereich von 4,7 bis 4,9 liegt.

5. Fettarmer Brotaufstrich nach einem der Ansprüche 1 bis 4, dadurch gekennzeichnet, daß der Gelierzusatz aus einem Gelatine und Natriumalginat ausgewählt ist und in einer Höhe zwischen 3,25 und 5 Gewichtsprozent der wässerigen Phase vorhanden ist.

6. Fettarmer Brotaufstrich nach Anspruch 5, wobei der Gelierzusatz in einer Höhe von ungefähr 3,33 Gewichtsprozent der wässerigen Phase vorhanden ist.

7. Fettarmer Brotaufstrich nach einem der vorhergehenden Ansprüche, wobei der Brotaufstrich einen Emulgator wie ein Monogylzerid enthält, der in einer Höhe von 0,1 bis 1 Gewichtsprozent des Produkts vorhanden ist.

8. Verfahren zur Bereitung eines fettarmen Brotaufstrichs nach einem der vorhergehenden Ansprüche mit folgenden Verfahrensschritten: Bereiten einer wässerigen Phase, die Wasser, einen Gelierzusatz, eine Säure und Salz umfaßt, Bereiten einer fetten Phase und Verbinden der wässerigen und fetten Phase, um eine Wasser-Öl-Emulsion zu bilden.

9. Verfahren nach Anspruch 8, dadurch gekennzeichnet, daß die wässerige Phase durch Bereiten einer ersten Lösung aus Wasser und einem Gelierzusatz und einer zweiten Lösung aus Wasser und Salz und nachfolgendem Verbinden und Mischen der beiden Lösungen bereitet wird.

10. Verfahren nach Anspruch 8 oder 9, dadurch gekennzeichnet, daß Milchsäure und fermentierte, in Wasser gelöste Magermilch der verbundenen Salz- und Gelierzusatzlösung zugefügt werden, um die wässerige Phase zu bilden.

11. Verfahren nach einem der Ansprüche 8 bis 10, wobei die gebildete Wasser-Öl-Emulsion durch eine positive Verdrängerpumpe durch eine Plattenwärmetauschereinheit gepumpt wird.

## Revendications

1. Pâte à tartiner pauvre en matières grasses, qui comprend : une phase continue de matières grasses, et
une phase dispersée qui est une phase aqueuse protéinée, gélifiée à l'aide d'un agent gélifiant, les protéines contenues dans la phase aqueuse provenant d'un lait écrémé reconstitué et fermenté et s'y trouvant en une quantité représentant de 0,2 à 0,4 % du poids de la phase aqueuse,
et dans laquelle la phase de matières grasses et la phase aqueuse sont combinées pour former une émulsion eau-dans-huile, la phase aqueuse contient un acide de sorte que le pH de cette phase aqueuse se situe dans l'intervalle allant de 0,4 à 5,6, et il y a des particules de protéines non dissoutes dont le diamètre moyen vaut plus de 10 µm.

2. Pâte à tartiner pauvre en matières grasses, conforme à la revendication 1, caractérisée en ce que la quantité de protéines contenue dans la phase aqueuse représente environ 0,38 % du poids de cette phase aqueuse.

3. Pâte à tartiner pauvre en matières grasses, conforme à la revendication 1 ou 2, caractérisée en ce que la source de protéines est constituée par des matières solides provenant d'un lait écrémé reconstitué et fermenté.

4. Pâte à tartiner pauvre en matières grasses, conforme à l'une des revendications 1 à 3, caractérisée en ce que le pH de la phase aqueuse se situe dans l'intervalle allant de 4,7 à 4,9.

5. Pâte à tartiner pauvre en matières grasses, conforme à l'une des revendications 1 à 4, caractérisée en ce que l'agent gélifiant est choisi parmi de la gélatine et de l'alginate de sodium, et en ce qu'il y en a une quantité représentant de 3,25 à 5 % du poids de la phase aqueuse.

6. Pâte à tartiner pauvre en matières grasses, conforme à la revendication 5, dans laquelle l'agent gélifiant se trouve en une quantité qui représente environ 3,33 % du poids de la phase aqueuse.

7. Pâte à tartiner pauvre en matières grasses, conforme à l'une des revendications précédentes, qui contient un émulsifiant, comme un monoglycéride, présent en une quantité représentant de 0,1 à 1 % du poids du produit.

8. Procédé de préparation d'une pâte à tartiner pauvre en matières grasses, conforme à l'une des revendications précédentes, qui comporte les étapes consistant à préparer une phase aqueuse contenant de l'eau, un agent gélifiant, un acide et du sel, à préparer une phase de matières grasses, et à combiner la phase aqueuse et la phase de matières grasses pour former une émulsion de type eau-dans-huile.

9. Procédé conforme à la revendication 8, caractérisé en ce que l'on prépare la phase aqueuse en préparant une première solution aqueuse de l'agent gélifiant, ainsi qu'une seconde solution aqueuse de sel, puis en réunissant ces deux solutions et en les mélangeant.

10. Procédé conforme à la revendication 8 ou 9, caractérisé en ce que, pour former la phase aqueuse, on ajoute, au mélange des solutions de sel et d'agent gélifiant, de l'acide lactique et des matières solides provenant d'un lait écrémé reconstitué et fermenté.

11. Procédé conforme à l'une des revendications 8 à 10, dans lequel on pompe l'émulsion eau-dans-huile formée, pour la faire passer dans un appareil d'échange thermique à plateaux, à l'aide d'une pompe volumétrique.
